# EUROPEAN PATENT APPLICATION

(11) **EP 2 030 999 A1**
(43) Date of publication of application: **04.03.2009**
(21) Application number: 08105125.2
(22) Date of filing: 26.08.2008
(51) Int. Cl.: C08F 285/00, C08L 51/06, C09D 151/06, C08F 255/00

(54) **Aqueous resin composition, aqueous coating composition and coating method for plastic molded articles**

(30) Priority: 28.08.2007 JP 2007220460; 29.11.2007 JP 2007308731
(71) Applicant: KANSAI PAINT CO., LTD., Amagasaki-shi, Hyogo (JP)
(72) Inventor: Yoshiaki Chino c/o KANSAI PAINT CO., LTD., Kanagawa (JP); Naoya Haruta c/o KANSAI PAINT CO., LTD., Kanagawa (JP); Kouichi Hirayama c/o KANSAI PAINT CO., LTD., Kanagawa (JP); Kazuo Soga c/o KANSAI PAINT CO., LTD., Kanagawa (JP); Hiromi Harakawa c/o KANSAI PAINT CO., LTD., Kanagawa (JP); Hideaki Katsuta c/o KANSAI PAINT CO., LTD., Kanagawa (JP)
(74) Representative: Cohausz & Florack

(57) **Abstract**

An aqueous resin composition obtained by emulsion polymerization using a polymerizable unsaturated monomer (b) in the presence of an aqueous resin dispersion (A) comprising an acid-modified polyolefin (a), an ether-based solvent and a basic substance. Also, an aqueous coating composition comprising an aqueous resin dispersion (B) obtained by emulsion polymerization of a polymerizable unsaturated monomer (b) in the presence of an aqueous resin dispersion (A) containing an acid-modified polyolefin (a), an ether-based solvent and a basic substance, with resin beads (C), wherein the content of resin beads (C) is 1-30 parts by mass with respect to 100 parts by mass of the total resin solid content of the coating material. The composition has excellent adhesion for plastic bases and allows formation of coated films with excellent water resistance, stain resistance, damage resistance and solvent resistance.

## Description

### BACKGROUND OF THE INVENTION

### 1. Field of the Invention

The present invention relates to an aqueous resin composition with excellent adhesion for plastic bases, which is capable of forming coated films with excellent water resistance, stain resistance, damage resistance and solvent resistance, as well as to an aqueous coating composition and a coating method for plastic molded articles.

### 2. Description of the Related Art

A variety of materials including polypropylene, polycarbonate and ABS are used as plastic materials for interior parts of automobiles, such as instrument panels, center consoles, dash-boards and door trimmings, and in recent years polypropylene materials, which have especially poor adhesion, are being increasingly used from the viewpoint of cost and recycling properties. It has therefore become an major goal to achieve adhesion on polypropylene materials and stain resistance (oil resistance), by single-coat finishing. Japanese Unexamined Patent Publication No. 2001-2977 proposes an aqueous coating composition whose essential component is a resin emulsion composed of a combination of a chlorinated polyolefin resin emulsion and acrylic resin emulsion in a specified proportion.

However, when a chlorinated polyolefin resin emulsion and acrylic resin emulsion are simply blended as in the composition disclosed in Japanese Unexamined Patent Publication No. 2001-2977, a problem arises as the adhesion for polypropylene materials and the water resistance and stain resistance (oil resistance) are inferior to those of organic solvent-based coating compositions.

Various modifications to chlorinated polyolefin resin emulsions have therefore been proposed in an attempt to improve performance. For example, in Japanese Unexamined Patent Publication HEI No. 7-300570, an aqueous resin composition is obtained by using a surfactant for aqueous emulsification of an organic solvent solution containing a chlorinated polyolefin with a high chlorination degree, and then polymerizing a vinyl-based monomer in the emulsion. Also, in Japanese Unexamined Patent Publication No. 2004-91559, an aqueous resin composition is obtained by adding a surfactant, a neutralizer and water to a chlorinated polyolefin modified with an unsaturated carboxylic acid, to render it aqueous, and then conducting emulsion polymerization of a vinyl-based monomer that is polymerizable with the chlorinated polyolefin, in water. It is stated that these aqueous resin compositions can form coated films with excellent adhesion and oil resistance.

However, since the aqueous resin compositions disclosed in Japanese Unexamined Patent Publication HEI No. 7-300570 and Japanese Unexamined Patent Publication No. 2004-91559 employ surfactants to render the chlorinated polyolefin aqueous, the surfactant remains in the coated film and lowers the water resistance.

Automobile interior parts also require film performance with single-coat finishing, as well as a pleasant feel, and while Japanese Unexamined Patent Publication No. 2007-169397 has proposed an aqueous one-pack type paint composition containing an emulsion comprising a resin with metal ion intermolecular bonds, and a polyolefin resin emulsion, resin particles and a urethane dispersion in specified proportions, the coated film hardness, damage resistance and water resistance with this coating composition are still inadequate.

### BRIEF SUMMARY OF THE INVENTION

It is an object of the invention to overcome the aforementioned problems by providing an aqueous resin composition with excellent adhesion for plastic bases, which is capable of forming coated films with excellent water resistance and stain resistance, as well as to an aqueous coating composition and a coating method for plastic molded articles.

In order to achieve this object, the invention provides an aqueous resin composition characterized by being obtained by emulsion polymerization using a polymerizable unsaturated monomer (b) in the presence of an aqueous resin dispersion (A) obtained from an acid-modified polyolefin (a), an ether-based solvent and a basic substance, as well as an aqueous coating composition comprising the resin composition and a coating method for plastic molded articles that employs the coating composition.

According to the invention, chlorinated polyolefins and the like can be rendered aqueous in a stable manner without using a surfactant, and polymerization of hydrophilic polymerizable unsaturated monomers such as carbonyl group-containing polymerizable unsaturated monomers or hydroxyl-containing polymerizable unsaturated monomers can be carried out in a stable manner during emulsion polymerization, while the aqueous resin composition obtained in such a manner can form coated films with excellent adhesion to plastic bases and with excellent water resistance and stain resistance.

It is another object of the invention to provide an aqueous coating composition and a coating method for plastic molded articles, which allow formation of coated films with excellent adhesion for plastic bases and with excellent water resistance, damage resistance and solvent resistance.

In order to achieve this object, the invention provides an aqueous coating composition characterized by comprising an aqueous resin dispersion (B) obtained by emulsion polymerization of a polymerizable unsaturated monomer (b) in the presence of an aqueous resin dispersion (A) comprising an acid-modified polyolefin (a), an ether-based solvent and a basic substance, with resin beads (C), wherein the resin beads (C) are added at 1-30 parts by mass with respect to 100 parts by mass of the total resin solid content of the coating material, as well as a coating method for plastic molded articles that employs the coating composition.

According to the invention, chlorinated polyolefins and the like can be rendered aqueous in a stable manner without using a surfactant as in the prior art, and polymerization of hydrophilic polymerizable unsaturated monomers such as carbonyl group-containing polymerizable unsaturated monomers or hydroxyl-containing polymerizable unsaturated monomers can be carried out in a stable manner during emulsion polymerization, while the aqueous coating composition obtained in such a manner, comprising an aqueous resin dispersion and resin beads in the specified proportion, can form coated films with excellent adhesion to plastic bases and with excellent water resistance, damage resistance and solvent resistance.

### DETAILED DESCRIPTION OF THE INVENTION

The acid-modified polyolefin (a) used for the invention is usually modified by employing a known method for graft copolymerization of a polyolefin obtained by polymerizing one or more compounds selected from among C2-10 olefins such as ethylene, propylene, butylene and hexene, with an unsaturated carboxylic acid such as (meth)acrylic acid, maleic acid, fumaric acid or itaconic acid or an acid anhydride thereof, and most preferably it is modified using maleic acid or its acid anhydride. The extent of graft copolymerization with the unsaturated carboxylic acid or its acid anhydride is suitably in the range of 1-20 mass% and preferably 2-10 mass% with respect to the solid weight of the polyolefin.

As polyolefins to be used for the acid-modified polyolefin (a) there are preferred polyolefins produced using single-site catalysts as the polymerization catalysts, from the viewpoint of obtaining a more narrow molecular weight distribution of the polyolefin and achieving superior random copolymerization. In a single-site catalyst, all of the active sites are of the same type (single site), and particularly preferred single-site catalysts are metallocene-based catalysts which are generally obtained by combining a metallocene (a bis(cyclopentadienyl) metal complex or a derivative thereof), as a transition metal compound of Groups 4-6 or 8 of the Periodic Table or a rare earth transition metal compound of Group 3, having at least one conjugated five-membered ring ligand, with a co-catalyst such as aluminoxane capable of activating it and an organic aluminum compound such as trimethylaluminum. The process for production of the polyolefin may be any process known in the prior art, and for example, there may be mentioned a process of production with continuous addition of an alkylaluminum compound and a metallocene-based catalyst while supplying propylene or ethylene and hydrogen to the reactor.

The acid-modified polyolefin (a) may be chlorinated if necessary. Chlorination of the polyolefin may be accomplished by blowing chlorine gas into an organic solvent solution or dispersion of the polyolefin or its modified form, and the reaction temperature may be 50-120°C. The chlorine content of the chlorinated polyolefin (solid portion) may be adjusted according to the physical properties desired for the chlorinated polyolefin, but from the viewpoint of adhesion of the formed coated film, it is generally preferred to be no greater than 35 mass%, particularly 10-30 mass% and especially 12-25 mass% based on the weight of the chlorinated polyolefin.

The polyolefin used for the acid-modified polyolefin (a) is most preferably one containing propylene as a polymerizing component, and the mass fraction of propylene in the acid-modified polyolefin (a) is preferably 0.5-0.99 and more preferably 0.7-0.95 from the viewpoint of compatibility with other components and adhesion of the formed coating film.

According to the invention, the acid-modified polyolefin (a) may be dispersed in an aqueous medium with an ether-based solvent and basic substance, if necessary with vacuum distillation of the solvent, to obtain an aqueous resin dispersion (A). As examples of such ether-based solvents there may be mentioned tetrahydrofuran, propyleneglycol monomethyl ether, propyleneglycol monoethyl ether, propyleneglycol monopropyl ether, diethyl ether, diisopropyl ether and diethyleneglycol monoethyl ether, among which tetrahydrofuran is particularly preferred from the viewpoint of boiling point and solubility.

An alcohol-based solvent may also be used in combination with the aforementioned ether-based solvents if necessary. As alcohol-based solvents there may be used C1-7 aliphatic alcohols, aromatic alcohols and alicyclic alcohols, with C3-5 alcohols being preferred. When an alcohol-based solvent is also used, the alcohol-based solvent content is preferably no greater than 40 mass% and preferably in the range of 5-30 mass%, based on the total weight of both. A hydroxyl-containing polymerizable unsaturated monomer may also be used instead of such an alcohol-based solvent. A hydroxyl-containing polymerizable unsaturated monomer may also be used instead of an alcohol-based solvent for production of the aqueous resin dispersion (B) described hereunder. As examples of hydroxyl-containing polymerizable unsaturated monomers there may be mentioned C₂-C₈ hydroxyalkyl (meth)acrylates of (meth)acrylic acid, such as 2-hydroxyethyl (meth)acrylate, 2-hydroxypropyl (meth)acrylate, 3-hydroxypropyl (meth)acrylate and hydroxybutyl (meth)acrylate, allyl alcohol, hydroxyl-containing (meth)acrylates such as ε-caprolactone-modified forms of these C₂-C₈ hydroxyalkyl (meth)acrylates, and (meth)acrylates having polyoxyethylene chains with molecular terminal hydroxyl groups, and any of these may be used alone or in combinations of two or more.

The amount of ether-based solvent or ether-based solvent and alcohol-based solvent may be 50-400 parts by mass and preferably 80-300 parts by mass with respect to 100 parts by mass of the acid-modified polyolefin (a).

As examples of basic substances there may be mentioned tertiary amines such as triethylamine, tributylamine, dimethylethanolamine and triethanolamine; secondary amines such as diethylamine, dibutylamine, diethanolamine and morpholine; primary amines such as propylamine and ethanolamine; and ammonia. The amount of basic substance used is preferably in the range of 0.8-4.0 mol equivalents with respect to the carboxyl groups in the acid-modified polyolefin (a).

From the viewpoint of water resistance of the coated film formed according to the invention, it is preferred not to use a surfactant to render the acid-modified polyolefin (a) aqueous.

The aqueous resin composition of the invention may be obtained by using a polymerizable unsaturated monomer (b) for emulsion polymerization in the presence of an aqueous resin dispersion (A) obtained as described above. This will yield an aqueous resin dispersion (B) for use in the aqueous coating composition of the invention.

As examples for the polymerizable unsaturated monomer (b) there may be mentioned alkyl or cycloalkyl (meth)acrylates such as methyl (meth)acrylate, ethyl (meth)acrylate, n-propyl (meth)acrylate, i-propyl (meth)acrylate, n-butyl (meth)acrylate, i-butyl (meth)acrylate, tert-butyl (meth)acrylate, n-hexyl (meth)acrylate, octyl (meth)acrylate, 2-ethylhexyl (meth)acrylate, nonyl (meth)acrylate, tridecyl (meth)acrylate, lauryl (meth)acrylate, stearyl (meth)acrylate, isostearyl (meth)acrylate, cyclohexyl (meth)acrylate, methylcyclohexyl (meth)acrylate, t-butylcyclohexyl (meth)acrylate and cyclododecyl (meth)acrylate; polymerizable unsaturated monomers with isobornyl groups such as isobornyl (meth)acrylate; polymerizable unsaturated monomers with adamantyl groups such as adamantyl (meth)acrylate; vinyl aromatic compounds such as styrene, α-methylstyrene and vinyltoluene; polymerizable unsaturated monomers with alkoxysilyl groups such as vinyltrimethoxysilane, vinyltriethoxysilane, vinyltris(2-methoxyethoxy)silane, γ-(meth)acryloyloxypropyltrimethoxysilane and γ-(meth)acryloyloxypropyltriethoxysilane; perfluoroalkyl (meth)acrylates such as perfluorobutylethyl (meth)acrylate and perfluorooctylethyl (meth)acrylate; polymerizable unsaturated monomers with fluorinated alkyl groups, such as fluoroolefins; polymerizable unsaturated monomers with photopolymerizable functional groups, such as maleimides; vinyl compounds such as N-vinylpyrrolidone, ethylene, butadiene, chloroprene, vinyl propionate and vinyl acetate; polymerizable unsaturated monomers with carboxyl groups such as (meth)acrylic acid, maleic acid, crotonic acid and β-carboxyethyl acrylate; nitrogen-containing polymerizable unsaturated monomers such as (meth)acrylonitrile, (meth)acrylamide, dimethylaminopropyl (meth)acrylamide, dimethylaminoethyl (meth)acrylate, and addition products of glycidyl (meth)acrylate with amines; (meth)acrylates with hydroxyl groups, including C₂-C₈ hydroxyalkyl (meth)acrylates of (meth)acrylic acids, such as 2-hydroxyethyl(meth)acrylate, 2-hydroxypropyl(meth)acrylate, 3-hydroxypropyl (meth)acrylate and hydroxybutyl (meth)acrylate, allyl alcohols, and ε-caprolactone-modified forms of these C₂-C₈ hydroxyalkyl (meth)acrylates; polymerizable unsaturated monomers with hydroxyl groups, such as (meth)acrylates having polyoxyethylene chains with molecular terminal hydroxyl groups; polymerizable unsaturated monomers with epoxy groups such as glycidyl (meth)acrylate; (meth)acrylates with polyoxyethylene chains having molecular terminal alkoxy groups; polymerizable unsaturated monomers with sulfonic acid groups, such as 2-acrylamide-2-methylpropanesulfonic acid, allylsulfonic acid, sodium styrenesulfonate salt, sulfoethyl methacrylate and sodium salts or ammonium salts of the foregoing; polymerizable unsaturated monomers with ultraviolet-absorbing functional groups, such as addition reaction products of glycidyl (meth)acrylate with hydroxybenzophenones such as 2-hydroxy-4-(3-methacryloyloxy-2-hydroxypropoxy)benzophenone, 2-hydroxy-4-(3-acryloyloxy-2-hydroxypropoxy)benzophenone, 2,2'-dihydroxy-4-(3-methacryloyloxy-2-hydroxypropoxy)benzophenone, 2,2'-dihydroxy-4-(3-acryloyloxy-2-hydroxypropoxy)benzophenone, or 2-(2'-hydroxy-5'-methacryloyloxyethylphenyl)-2H-benzotriazole; ultraviolet ray-stable polymerizable unsaturated monomers such as 4-(meth)acryloyloxy-1,2,2,6,6-pentamethylpiperidine, 4-(meth)acryloyloxy-2,2,6,6-tetramethylpiperidine, 4-cyano-4-(meth)acryloylamino-2,2,6,6-tetramethylpiperidine, 1-(meth)acryloyl-4-(meth)acryloylamino-2,2,6,6-tetramethylpiperidine, 1-(meth)acryloyl-4-cyano-4-(meth)acryloylamino-2,2,6,6-tetramethylpiperidine, 4-crotonoyloxy-2,2,6,6-tetramethylpiperidine, 4-crotonoylamino-2,2,6,6-tetramethylpiperidine and 1-crotonoyl-4-crotonoyloxy-2,2,6,6-tetramethylpiperidine; polymerizable unsaturated monomers with carbonyl groups, such as acrolein, diacetoneacrylamide, diacetonemethacrylamide, acetoacetoxyethyl methacrylate, formylstyrol and C4-7 vinylalkylketones (for example, vinylmethylketone, vinylethylketone and vinylbutylketone); and polyvinyl compounds with at least two polymerizable unsaturated groups in the molecule, such as allyl (meth)acrylate, ethyleneglycol di(meth)acrylate, triethyleneglycol di(meth)acrylate, tetraethyleneglycol di(meth)acrylate, 1,3-butyleneglycol di(meth)acrylate, trimethylolpropane tri(meth)acrylate, 1,4-butanediol di(meth)acrylate, neopentylglycol di(meth)acrylate, 1,6-hexanediol di(meth)acrylate, pentaerythritol di(meth)acrylate, pentaerythritol tetra(meth)acrylate, glycerol di(meth)acrylate, 1,1,1-trishydroxymethylethane di(meth)acrylate, 1,1,1-trishydroxymethylethane tri(meth)acrylate, 1,1,1-trishydroxymethylpropane tri(meth)acrylate, triallyl isocyanurate, diallyl terephthalate and divinylbenzene, and these may be used alone or in combinations of two or more, according to the performance desired for the aqueous resin dispersion.

Throughout the present specification, the term "(meth)acrylic" means "acrylic or methacrylic", and the term "(meth)acrylate" means "acrylate or methacrylate".

According to the invention, the polymerizable unsaturated monomer (b) is preferably partially composed of a hydroxyl-containing polymerizable unsaturated monomer, from the viewpoint of weather resistance and water resistance of the obtained coated film, and from the viewpoint of crosslinking with a curing agent when it is used together with a curing agent that can promote reaction of the aqueous resin composition with hydroxyl groups, such as an isocyanate-based or melamine-based curing agent, for example.

As examples of hydroxyl-containing polymerizable unsaturated monomers there may be mentioned compounds having one hydroxyl group and one polymerizable unsaturated group in the molecule, and specifically C₂-C₈ hydroxyalkyl (meth)acrylates of (meth)acrylic acid such as 2-hydroxyethyl (meth)acrylate, 2-hydroxypropyl (meth)acrylate, 3-hydroxypropyl (meth)acrylate and hydroxybutyl (meth)acrylate, allyl alcohol, hydroxyl-containing (meth)acrylates such as ε-caprolactone-modified forms of these C₂-C₈ hydroxyalkyl (meth)acrylates, and (meth)acrylates having polyoxyethylene chains with molecular terminal hydroxyl groups, any of which may be used alone or in combinations of two or more. The hydroxyl-containing polymerizable unsaturated monomer is preferably used, for most purposes, in a range of 1-30 mass% and preferably 3-20 mass% based on the total weight of the monomer (b).

According to the invention, the polymerizable unsaturated monomer (b) is preferably partially composed of a carbonyl group-containing polymerizable unsaturated monomer, from the viewpoint of weather resistance and water resistance of the obtained coated film, and from the viewpoint of crosslinking with hydrazine derivatives when the obtained aqueous resin composition is used together with a hydrazine derivative.

As carbonyl group-containing polymerizable unsaturated monomers there may be mentioned compounds having one carbonyl group and one polymerizable unsaturated bond in the molecule, and specifically acrolein, diacetoneacrylamide, diacetonemethacrylamide, acetoacetoxyethyl methacrylate, formylstyrol and C4-7 vinyl alkyl ketones (for example, vinyl methyl ketone, vinyl ethyl ketone and vinyl butyl ketone), any one of which may be used alone or in combinations of two or more. Diacetone (meth)acrylamide is particularly preferred among those mentioned above. The carbonyl group-containing polymerizable unsaturated monomer is preferably used, for most purposes, in a range of 1-30 mass% and preferably 3-20 mass% based on the total weight of the monomer (b).

According to the invention, the polymerizable unsaturated monomer (b) is preferably at least partially composed of a polyvinyl compound with at least two polymerizable unsaturated groups in the molecule, from the viewpoint of water resistance and solvent resistance of the formed coated film.

As examples of polyvinyl compounds there may be mentioned allyl (meth)acrylate, ethyleneglycol di(meth)acrylate, triethyleneglycol di(meth)acrylate, tetraethyleneglycol di(meth)acrylate, 1,3-butyleneglycol di(meth)acrylate, trimethylolpropane tri(meth)acrylate, 1,4-butanediol di(meth)acrylate, neopentylglycol di(meth)acrylate, 1,6-hexanediol di(meth)acrylate, pentaerythritol di(meth)acrylate, pentaerythritol tetra(meth)acrylate, glycerol di(meth)acrylate, 1,1,1-tris-hydroxymethylethane di(meth)acrylate, 1,1,1-trishydroxymethylethane tri(meth)acrylate, 1,1,1-trishydroxymethylpropane tri(meth)acrylate, triallyl isocyanurate, diallyl terephthalate and divinylbenzene, any of which may be used alone or in combinations of two or more. The polyvinyl compound is preferably used, for most purposes, in a range of 0.1-15 mass% and preferably 0.5-10 mass% based on the total weight of the monomer (b).

A known emulsifying agent such as an anionic surfactant or nonionic surfactant may be used if necessary for the emulsion polymerization, and reactive emulsifying agents, which are such surfactants having polymerizable unsaturated groups, may also be suitably used, for emulsion polymerization using a polymerization initiator in the presence of one or more emulsifying agents. The use of a reactive emulsifying agent is particularly preferred from the viewpoint of stability of the emulsified particles and water resistance of the formed coated film. The amount of emulsifying agent used may be in the range of 0.1-10 mass% and preferably 0.5-9 mass%, based on the total weight of the monomer (b).

The polymerization initiator used may be a known one, for example, an azo-based initiator such as azobisisobutyronitrile, azobisisovaleronitrile, 4 or 4'-azobis-4-cyanovaleric acid, or ammonium persulfate, potassium persulfate or a peroxide such as t-butyl hydroperoxide. If necessary, a reducing agent such as a sugar, sodium formaldehyde sulfoxylate or an iron complex may be used with the polymerization initiator, to prepare a redox polymerization system. The reaction temperature for the emulsion polymerization is preferably about 30-95°C.

For the emulsion polymerization, the ratio of the acid-modified polyolefin (a) and polymerizable unsaturated monomer (b) used is in the range of 5/95-95/5 and preferably 20/80-80/20, as the solid mass ratio, from the viewpoint of compatibility of both components and adhesion of the formed coated film.

The solid concentration of the aqueous resin composition of the invention obtained in the manner described above is suitably in the range of 15-45 mass%.

The coating composition of the invention contains the aqueous resin composition obtained as described above, and if necessary it may also contain a hydrazine derivative. As specific examples of hydrazine derivatives there may be mentioned C2-18 saturated dicarboxylic dihydrazides such as oxalic dihydrazide, malonic dihydrazide, glutaric dihydrazide, succinic dihydrazide, adipic dihydrazide and sebacic dihydrazide; monoolefinic unsaturated dicarboxylic dihydrazides such as maleic dihydrazide, fumaric dihydrazide and itaconic dihydrazide; phthalic dihydrazide, terephthalic dihydrazide or isophthalic dihydrazide; pyromellitic dihydrazide, trihydrazide or tetrahydrazide; nitrilotrihydrazide, citric trihydrazide, 1,2,4-benzene trihydrazide, ethylenediaminetetraacetic tetrahydrazide and 1,4,5,8-naphthoic tetrahydrazide; polyhydrazides obtained by reacting lower polymers containing carboxylic acid lower alkyl ester groups, with hydrazine or hydrazine hydride; hydrazide group-containing compounds such as carbonic dihydrazide; bissemicarbazides; polyfunctional semicarbazides obtained by reacting diisocyanates such as hexamethylene diisocyanate or isophorone diisocyanate or polyisocyanate compounds derived therefrom with an excess of an N,N-substituted hydrazine such as N,N-dimethylhydrazine or a hydrazide mentioned above, and aqueous polyfunctional semicarbazides obtained by reacting an excess of a dihydrazide mentioned above with the isocyanate group of a reaction product between a polyisocyanate compound mentioned above, a polyether and an active hydrogen compound containing hydrophilic groups, such as a polyol or polyethyleneglycol monoalkyl ether; compounds with semicarbazide groups such as mixtures of the aforementioned polyfunctional semicarbazides and aqueous polyfunctional semicarbazides; and compounds with hydrazone groups such as bisacetyldihydrazone.

If the aqueous coating composition contains such hydrazine derivatives, the coated film formed therefrom will adsorb hazardous substances such as formaldehyde in the air, and will therefore be applicable for interior use to remove such hazardous substances, while if the aqueous resin composition has carbonyl groups, it will be useful as a crosslinking agent for auxiliary crosslinking.

The hydrazine derivative content is generally preferred to be in the range of 0.01-10 mass% and especially 0.05-8 mass% based on the resin solid content of the aqueous resin composition.

When the aqueous resin composition contains a resin with crosslinkable functional groups such as hydroxyl groups, the coating composition of the invention may also include a curing agent with crosslinkable functional groups capable of reacting with the functional groups, such as isocyanate-based curing agents or melamine-based curing agents.

If necessary, the coating composition of the invention may also contain other water-soluble or water-dispersible resins, and as examples of such water-soluble or water-dispersible resins there may be mentioned urethane resins, acrylic resins, polyester resins, grafted forms of these resins, acryl-modified or polyester-modified epoxy resins, and self-crosslinking resins such as block isocyanate group-containing polyester resins, among which urethane dispersions, water-soluble or water-dispersible acrylic resins or water-soluble or water-dispersible polyester resins are preferred.

The coating composition of the invention may further contain, if necessary, color pigments such as titanium oxide, red iron oxide, aluminum paste, azo-based pigments and phthalocyanine-based pigments or extender pigments such as talc, silica, calcium carbonate, barium sulfate, zinc flower (zinc oxide) and the like, any of which may be used alone or in combinations of two or more. Conductive pigments may also be included if the purpose of use is as a primer. For example, coating additives such as curing catalysts, rheology controllers, resin fine particles, antifoaming agents, surface control agents, ultraviolet absorbers, antioxidants, antiseptic agents, mildew resistant agents, plasticizers, organic solvents and the like may be added as appropriate.

The aqueous coating composition of the invention obtained in the manner described above may be used for coating of plastic molded articles.

As examples of plastic molded articles there may be mentioned automobile external platings on bumpers, spoilers, grills, fenders and the like; automobile interior parts such as dash-boards, instrument panels and handles; and plastic molded articles used on the external platings of household electrical appliances; which are most suitably made of materials such as polyolefins obtained by (co)polymerization of one or more C2-10 olefins such as ethylene, propylene, butylene or hexene, although the composition of the invention may also be applied to polycarbonates, ABS resins, urethane resins, polyamides and the like.

Such plastic molded articles may be subjected to appropriate degreasing or rinsing treatment by known methods prior to coating of the composition of the invention.

The coating composition of the invention may be coated using air spray, airless spray, dip painting, brushing or the like, usually to a dry film thickness on the coated article in the range of 1-50 µm and preferably 5-45 µm, for primer coatings, or to a dry film thickness in the range of 5-50 µm and preferably 10-40 µm for single-coat finishing. The coated film surface obtained after coating the composition may, if necessary, be treated by setting at room temperature for 1-60 minutes or by preheating at a temperature of about 40-80°C for 1-60 minutes, or it may be cured by heating at a temperature of about 60-140°C and preferably about 60-120°C for about 20-40 minutes.

The coating method of the invention may involve coating of an aqueous coating composition obtained as described above onto a plastic molded article as a single-coat finishing, or coating of an aqueous coating composition obtained as described above onto a plastic molded article as a primer coating followed by coating of a top coat over the coated surface. The top coat may be applied as a simple pigmented coating, or the pigmented coating may be used as a base coating material for successive coating of the base coating material and a clear coating material.

The colored base coating material may be any known one, which will generally be composed mainly of a coloring component such as a color pigment, luster pigment or dye and resin components such as a base resin and crosslinking agent, with an organic solvent and/or water as the primary solvent.

As examples of base resins to be used in the colored base coating material there may be mentioned acrylic resins, polyester resins and alkyd resins with crosslinkable functional groups such as hydroxyl, epoxy, carboxyl and silanol groups. As crosslinking agents there may be mentioned amino resins such as melamine resins or urea resins, or (block) polyisocyanates, polyepoxides, polycarboxylic acids and the like that are capable of reacting with the functional groups.

The colored base coating material may also, if necessary, contain appropriate amounts of paint additives such as extender pigments, curing catalysts, ultraviolet absorbers, coated surface modifiers, rheology controllers, antioxidants, antifoaming agents, waxes, antiseptic agents and the like.

The colored base coating material may be electrostatically coated, usually to a dry film thickness in the range of 5-50 µm and preferably 10-20 µm, and the obtained coated film may be surface treated if necessary by setting at room temperature for 1-60 minutes or preheating at about 40-80°C for 1-60 minutes, or heated for curing at about 60-140°C and preferably about 80-120°C for a period of 20-40 minutes.

As clear coatings for the method of the invention there may be used organic solvent-based or aqueous thermosetting coating materials composed mainly of a resin component such as a base resin or crosslinking agent and an organic solvent or water, if necessary also comprising paint additives such as ultraviolet absorbers, light stabilizers, curing catalysts, coated surface modifiers, rheology controllers, antioxidants, antifoaming agents, waxes and the like, and having a degree of transparency allowing the underlying coated film to be visible through the clear coating film.

As examples of base resins there may be mentioned acrylic resins, polyester resins, alkyd resins, fluorine resins, urethane resins and silicon-containing resins containing at least one type of crosslinkable functional group such as a hydroxyl, carboxyl, silanol or epoxy group, with hydroxyl group-containing acrylic resins being particularly preferred. As crosslinking agents there may be mentioned melamine resins, urea resins, (block) polyisocyanate compounds, epoxy compounds, carboxyl group-containing compounds, acid anhydrides, alkoxysilane group-containing compounds and the like, which are capable of reacting with the functional groups, and polyisocyanate compounds are especially preferred among these.

The clear coating may be coated by electrostatic coating to a dry film thickness in the range of 10-50 µm and preferably 15-40 µm, and if necessary treating the obtained coated film surface by setting at room temperature for 1-60 minutes or preheating at about 40-80°C for 1-60 minutes, followed by heating for curing at about 60-140°C and preferably about 70-120°C for a period of 20-40 minutes.

For the aqueous resin dispersion (B) obtained by the method described above as well, the solid concentration is preferably in the range of 15-45 mass%.

The present invention also provides an aqueous coating composition characterized by comprising an aqueous resin dispersion (B) obtained by emulsion polymerization of a polymerizable unsaturated monomer (b) in the presence of an aqueous resin dispersion (A) comprising an acid-modified polyolefin (a), an ether-based solvent and a basic substance, with resin beads (C), wherein the resin beads (C) are added at 1-30 parts by mass with respect to 100 parts by mass of the total resin solid content of the coating material.

From the viewpoint of improving the adhesion of the obtained coated film, an aqueous resin dispersion (A') comprising an acid-modified polyolefin (a), an ether-based solvent and a basic substance may be used in combination with the aqueous resin dispersion (B) in the coating composition of the invention. So long as it is an aqueous resin dispersion containing the acid-modified polyolefin (a), an ether-based solvent and a basic substance, the aqueous resin dispersion (A') may be the same as or different from the aqueous resin dispersion used as component (A) for production of the aqueous resin dispersion (B), and the acid-modified polyolefin, ether-based solvent and basic substance used may be appropriately selected among those mentioned above.

From the viewpoint of improving the coated film adhesion and the solvent resistance, the aqueous resin dispersion (A') and aqueous resin dispersion (B) used as explained above preferably contains (A') at 1-50 mass% and preferably 5-40 mass% and (B) at 50-99 mass% and preferably 60-95 mass%, based on the total solid content of both components.

The coating composition of the invention contains resin beads (C) at 1-30 parts by mass and preferably 5-25 parts by mass with respect to 100 parts by mass of the total resin solid content in the coating material. If the content is below this range the damage resistance of the obtained coated film will be inferior, and if it is above this range the finished appearance will be impaired.

As examples of resin beads (C) there may be mentioned polyethylene resin beads, polypropylene resin beads, acrylic resin beads, urethane resin beads, polyester resin beads, polyamide resin beads, polystyrene resin beads, nylon resin beads and the like, any of which may be used alone or in combinations of two or more. Polyethylene resin beads are preferred among these from the viewpoint of damage resistance of the formed coated film.

From the viewpoint of finished appearance, the resin beads (C) preferably have a mean particle size in the range of 0.1-30 µm and preferably 0.5-15 µm. The mean particle size is the median diameter (d50) of the volume-based particle size distribution measured by laser diffraction scattering, and it may be measured using, for example, a MICROTRAC particle size distribution analyzer by Nikkiso Co., Ltd.

The coating composition of the invention must contain components (B) and (C), and may further contain a hydrazine derivative if necessary. As specific examples of hydrazine derivatives there may be mentioned C2-18 saturated dicarboxylic dihydrazides such as oxalic dihydrazide, malonic dihydrazide, glutaric dihydrazide, succinic dihydrazide, adipic dihydrazide and sebacic dihydrazide; monoolefinic unsaturated dicarboxylic dihydrazides such as maleic dihydrazide, fumaric dihydrazide and itaconic dihydrazide; phthalic dihydrazide, terephthalic dihydrazide or isophthalic dihydrazide; pyromellitic dihydrazide, trihydrazide or tetrahydrazide; nitrilotrihydrazide, citric trihydrazide, 1,2,4-benzene trihydrazide, ethylenediaminetetraacetic tetrahydrazide and 1,4,5,8-naphthoic tetrahydrazide; polyhydrazides obtained by reacting lower polymers containing carboxylic acid lower alkyl ester groups, with hydrazine or hydrazine hydride; hydrazide group-containing compounds such as carbonic dihydrazide; bissemicarbazides; polyfunctional semicarbazides obtained by reacting diisocyanates such as hexamethylene diisocyanate or isophorone diisocyanate or polyisocyanate compounds derived therefrom with an excess of an N,N-substituted hydrazine such as N,N-dimethylhydrazine or a hydrazide mentioned above, and aqueous polyfunctional semicarbazides obtained by reacting an excess of a dihydrazide mentioned above with the isocyanate group of a reaction product between a polyisocyanate compound mentioned above, a polyether and an active hydrogen compound containing hydrophilic groups, such as a polyol or polyethyleneglycol monoalkyl ether; compounds with semicarbazide groups such as mixtures of the aforementioned polyfunctional semicarbazides and aqueous polyfunctional semicarbazides; and compounds with hydrazone groups such as bisacetyldihydrazone.

If the aqueous coating composition contains such hydrazine derivatives, the coated film formed therefrom will adsorb hazardous substances such as formaldehyde in the air, and will therefore be applicable for interior use to remove such hazardous substances, while if the aqueous resin composition has carbonyl groups, it will be useful as a crosslinking agent for auxiliary crosslinking.

The hydrazine derivative content is generally preferred to be in the range of 0.01-10 mass% and especially 0.05-8 mass% based on the resin solid content of the aqueous resin dispersion (B) (including cases where the aqueous resin dispersion (A') is used).

When the aqueous resin dispersion (B) (including cases where the aqueous resin dispersion (A') is used) contains a resin with crosslinkable functional groups such as hydroxyl groups, the coating composition of the invention may also include a curing agent with crosslinkable functional groups capable of reacting with the functional groups, such as isocyanate-based curing agents or melamine-based curing agents.

If necessary, the coating composition of the invention may also contain other water-soluble or water-dispersible resins, and as examples of such water-soluble or water-dispersible resins there may be mentioned urethane resins, acrylic resins, polyester resins, grafted forms of these resins, acryl-modified or polyester-modified epoxy resins, and self-crosslinking resins such as block isocyanate group-containing polyester resins, among which urethane dispersions, water-soluble or water-dispersible acrylic resins or water-soluble or water-dispersible polyester resins are preferred.

The coating composition of the invention may further contain, if necessary, color pigments such as titanium oxide, carbon black, red iron oxide, aluminum paste, azo-based pigments and phthalocyanine-based pigments or extender pigments such as talc, silica, calcium carbonate, barium sulfate, zinc flower (zinc oxide) and the like, any of which may be used alone or in combinations of two or more.

According to the invention, such pigments and especially talc, are preferably used at 5-100 parts by mass and more preferably 10-90 parts by mass with respect to 100 parts by mass as the total resin solid content of the coating material, from the viewpoint of the solvent resistance of the formed coated film.

For example, coating additives such as curing catalysts, rheology controllers, resin fine particles, antifoaming agents, surface control agents, ultraviolet absorbers, antioxidants, antiseptic agents, mildew resistant agents, plasticizers, organic solvents and the like may also be added as necessary to the coating composition of the invention.

The aqueous coating composition of the invention obtained in the manner described above may be used for coating of plastic molded articles.

As examples of plastic molded articles there may be mentioned plastic molded articles used for automobile interior parts and external platings of household electrical appliances, including instrument panels, door trimmings, console panels, center clusters, switch panels, meter hoods, shift knobs, handles and the like, and the materials of such plastic molded articles may be surface-treated, undercoated or intercoated as necessary, or composite members may incorporate combinations of such parts. As examples of plastic molded article materials there are especially preferred polyolefins obtained by (co)polymerization of one or more C2-10 olefins such as ethylene, propylene, butylene or hexene, although the composition of the invention may also be applied to polycarbonates, ABS resins, urethane resins, polyamides and the like.

The composition of the invention may be coated onto an article by air spraying, airless spraying, dip painting, brushing or the like, normally to a dry film thickness in the range of 5-50 µm and preferably 10-40 µm. After coating the composition, the obtained coated film surface may be heated at a temperature of about 50-140°C and preferably 50-80°C for 20-40 minutes, as necessary.

The present invention will now be explained in greater detail by examples. Unless otherwise specified, the "parts" and "%" values throughout the examples represent parts by mass and mass%.

### Production of aqueous resin composition

### Example 1

A four-necked flask equipped with a thermometer, stirrer and reflux condenser was exchanged with nitrogen, and then 100 g of SUPERCHLON S-851LS (maleic anhydride-modified chlorinated polyolefin, trade name of Nippon Paper Chemicals Co., Ltd.) and 190 g of tetrahydrofuran were added and the mixture was thoroughly melted at 65°C. Next, 40 g of 1-butanol and 3 g of dimethylethanolamine were added and the mixture was stirred for 15 minutes, after which 300 g of deionized water was added and dispersed therein. The solvent portion was then distilled off under reduced pressure at 65°C to obtain aqueous dispersion (A-1) containing an acid-modified chlorinated polyolefin. The solid concentration of the dispersion was 30%, and the pH was 8.1.

Next, 131.9 g of deionized water was added to 133.3 g of aqueous dispersion (A-1) while stirring with a Disper mixer for dilution, and then 60 g of the polymerizable monomer mixture (b-1) having the composition shown in Table 1 below and 4 g of ADEKA REASOAP SR-1025 (reactive emulsifier, trade name of Adeka Corp.) were added. This was transferred to a four-necked flask equipped with a thermometer, stirrer and reflux condenser, and after heating to 65°C, 0.42 g of "VA-057" (polymerization initiator, product of Wako Pure Chemical Industries, Ltd.) diluted with 8.4 g of deionized water was added and reacted for 1.5 hours to obtain aqueous resin composition (I-1). The solid concentration of the aqueous resin composition was 30%, and the pH was 8.0.

### Examples 2-6

Aqueous resin compositions (I-2)-(I-6) were obtained in the same manner as Example 1, except that the mixing composition of the polymerizable monomer mixture in Example 1 was changed as shown in Table 1.

**Table 1**

| | Example | | | | | |
|---|---|---|---|---|---|---|
| | 1 | 2 | 3 | 4 | 5 | 6 |
| Aqueous resin composition | I-1 | I-2 | I-3 | I-4 | I-5 | 1-6 |
| Monomer mixture | b-1 | b-2 | b-3 | b-4 | b-5 | b-6 |
| Methyl methacrylate | | | 34.2 | 32.4 | | |
| n-Butyl methacrylate | | | 19.2 | 18 | | |
| t-Butyl methacrylate | 45.7 | 41.7 | | | 18 | 18 |
| Cyclohexyl methacrylate | 10.8 | 9.9 | | | 12 | 12 |
| 2-Ethylhexyl methacrylate | | | | | 30 | 24 |
| Diacetone acrylamide | | 5.2 | 6 | 6 | | |
| 2-Hydroxyethyl methacrylate | | | | | | 6 |
| 1,6-Hexanediol diacrylate | 2.9 | 2.6 | | 3 | | |
| Glycidyl methacrylate | 0.6 | 0.6 | 0.6 | 0.6 | | |
| Solid concentration (%) | 30 | 30 | 30 | 30 | 30 | 30 |
| pH | 8 | 8 | 8 | 8 | 8 | 8 |

### Comparative Example 1

A four-necked flask equipped with a thermometer, stirrer and reflux condenser was exchanged with nitrogen, and then 100 g of SUPERCHLON S-851LS (maleic anhydride-modified chlorinated polyolefin, trade name of Nippon Paper Chemicals Co., Ltd.) and 100 g of cyclohexane were added and the mixture was thoroughly melted at 65°C. Next, 20 g of EMANON 1112 (polyethyleneglycol monolaurate, product of Kao Corp.) and 2 g of NEWCOL 271A (alkyldiphenylether disulfonic acid sodium salt, product of Nippon Nyukazai Co., Ltd.) were added, the mixture was stirred for 15 minutes, and 300 g of deionized water was added and dispersed therein. The solvent portion was then distilled off under reduced pressure at 65°C to obtain aqueous dispersion (A-2) containing an acid-modified chlorinated polyolefin. The solid concentration of the dispersion was 25%, and the pH was 8.1.

Next, 105.2 g of deionized water was added to 160.0 g of aqueous dispersion (A-2) while stirring with a Disper mixer for dilution, and 60 g of the polymerizable monomer mixture (b-1) shown in Table 1 was added. This was transferred to a four-necked flask equipped with a thermometer, stirrer and reflux condenser, and after heating to 65°C, 0.42 g of VA-057 diluted with 8.4 g of deionized water was added and reacted for 1.5 hours to obtain aqueous resin composition (I-7). The solid concentration of the aqueous resin composition was 30%, and the pH was 7.2.

### Example 7

A four-necked flask equipped with a thermometer, stirrer and reflux condenser was exchanged with nitrogen, and then 100 g of SUPERCHLON S-851LS and 190 g of tetrahydrofuran were added and the mixture was thoroughly melted at 65°C. Next, 2.6 g of dibutylamine and 3 g of dimethylethanolamine were added and the mixture was stirred for 15 minutes, after which 300 g of deionized water was added and dispersed therein. The solvent was then distilled off under reduced pressure at 65°C to obtain aqueous dispersion (A-3) containing an acid-modified chlorinated polyolefin. The solid concentration of the dispersion was 30%, and the pH was 8.2.

Next, 131.9 g of deionized water was added to 133.3 g of aqueous dispersion (A-3) while stirring with a Disper mixer for dilution, and 60 g of the polymerizable monomer mixture (b-1) shown in Table 1 and 4 g of ADEKA REASOAP SR-1025 were added. This was transferred to a four-necked flask equipped with a thermometer, stirrer and reflux condenser, and after heating to 65°C, 0.42 g of VA-057 diluted with 8.4 g of deionized water was added and reacted for 1.5 hours to obtain aqueous resin composition (I-8). The solid concentration of the aqueous resin composition was 30%, and the pH was 7.2.

### Example 8

A four-necked flask equipped with a thermometer, stirrer and reflux condenser was exchanged with nitrogen, and then 100 g of SUPERCHLON S-851LS and 190 g of tetrahydrofuran were added and the mixture was thoroughly melted at 65°C. Next, 2.3 g of 2-hydroxyethyl acrylate and 3 g of dimethylethanolamine were added and the mixture was stirred for 15 minutes, after which 300 g of deionized water was added and dispersed therein. The solvent was then distilled off under reduced pressure at 65°C to obtain aqueous dispersion (A-4) containing an acid-modified chlorinated polyolefin. The solid concentration of the dispersion was 30%, and the pH was 8.0.

Next, 131.9 g of deionized water was added to 133.3 g of aqueous dispersion (A-4) while stirring with a Disper mixer for dilution, and then 46 g of t-butyl methacrylate, 11 g of cyclohexyl methacrylate, 3 g of 1,6-hexanediol diacrylate and 4 g of ADEKA REASOAP SR-1025 were added. This was transferred to a four-necked flask equipped with a thermometer, stirrer and reflux condenser, and after heating to 65°C, 0.42 g of VA-057 diluted with 8.4 g of deionized water was added and reacted for 1.5 hours to obtain aqueous resin composition (I-9). The solid concentration of the aqueous resin composition was 30%, and the pH was 7.3.

### Preparation of aqueous coating materials

### Example 9

After combining 60 parts by solid weight of the aqueous resin composition (I-1), 20 parts by solid weight of UCOAT UX310 (urethane dispersion, product of Sanyo Chemical Industries, Ltd.), 20 parts by solid weight of an acrylic resin solution(*1), 50 parts of MICRO ACE K-1 (fine talc powder, product of Nippon Talc Co., Ltd.), 50 parts of JR-806 (titanium white, product of Tayca Corp.) and 2 parts of MA100 (carbon black, product of Mitsubishi Chemical Corp.) following an ordinary procedure, the mixture was diluted with deionized water to a solid content of 35% to obtain aqueous coating material (1).

### Examples 10-20 and Comparative Examples 2-6

Aqueous coating materials (2)-(17) were obtained in the same manner as Example 9, except that the mixing composition of Example 9 was changed as shown in Table 2.

The contents shown in Table 2 are expressed as solid contents, and (*1)-(*2) in the table are as follows.

(*1) Acrylic resin solution: 35 parts of ethyleneglycol monobutyl ether was charged into an ordinary acrylic resin reaction tank equipped with a stirrer, thermometer and reflux condenser, heated while stirring, and held at 110°C. A mixture of 10 parts of styrene, 40 parts of methyl methacrylate, 25 parts of n-butyl methacrylate, 10 parts of 2-hydroxyethyl methacrylate, 3 parts of methacrylic acid, 5 parts of N,N-dimethylaminoethyl methacrylate (solid content; added as a solution in 10 parts of deionized water), 10 parts of NF BISOMER PEM6E (polyethyleneglycol monomethacrylate with molecular weight of approximately 350, trade name of Dai-ichi Kogyo Seiyaku Co., Ltd.), 4 parts of azobisisobutyronitrile and 20 parts of isobutyl alcohol, was added thereto dropwise over a period of 3 hours. Upon completion of the dropwise addition, the mixture was matured at 110°C for 30 minutes, and then an additional catalyst mixture comprising 15 parts of ethyleneglycol monobutyl ether and 0.5 part of azobisisobutyronitrile was added dropwise over a period of one hour. After further maturing at 110°C for 1 hour, the mixture was cooled to obtain an acrylic resin solution with a solid content of 55%.

(*2) VULCAN XC-72, conductive carbon black pigment by Cabot Specialty Chemicals, Inc.

**Table 2**

| | Example | | | | | | | | | | | | Comp. Ex. | | | | |
|---|---|---|---|---|---|---|---|---|---|---|---|---|---|---|---|---|---|
| | 9 | 10 | 11 | 12 | 13 | 14 | 15 | 16 | 17 | 18 | 19 | 20 | 2 | 3 | 4 | 5 | 6 |
| Aqueous coating | (1) | (2) | (3) | (4) | (5) | (6) | (7) | (8) | (9) | (10) | (11) | (12) | (13) | (14) | (15) | (16) | (17) |
| Aqueous resin composition (I-1) | 60 | | 40 | | | | 50 | | | | | | | | | | |
| Aqueous resin composition (1-2) | | 60 | 40 | | | | | 50 | | | | | | | | | |
| Aqueous resin composition (1-3) | | | | 60 | | | | | | | | | | | | | |
| Aqueous resin composition (1-4) | | | | | 80 | | | | 50 | | | | | | | | |
| Aqueous resin composition (1-5) | | | | | | | | | | 50 | | | | | | | |
| Aqueous resin composition (1-6) | | | | | | | | | | | 50 | | | | | | |
| Aqueous resin composition (1-7) | | | | | | | | | | | | | 60 | | | 50 | |
| Aqueous resin composition (I-8) | | | | | | 60 | | | | | | | | | | | |
| Aqueous resin composition (1-9) | | | | | | | | | | | | 60 | | | | | |
| Aqueous dispersion (A-1) | | | | | | | | | | | | | | 60 | | | |
| Aqueous dispersion (A-2) | | | | | | | | | | | | | | | 60 | | 50 |
| UCOAT UX310 | 20 | 20 | | 20 | | 20 | 30 | 30 | 30 | 30 | 30 | 20 | 20 | 20 | 20 | 30 | 30 |
| Adipic dihydrazide | | 0.1 | 0.1 | 0.1 | 0.1 | | | 0.1 | | | | | | | | | |
| Acryl resin solution (*1) | 20 | 20 | 20 | 20 | 20 | 20 | 20 | 20 | 20 | 20 | 20 | 20 | 20 | 20 | 20 | 20 | 20 |
| MICRO ACE K-1 | 50 | 50 | 50 | 50 | 50 | 50 | 50 | 50 | 50 | 50 | 50 | 50 | 50 | 50 | 50 | 50 | 50 |
| JR-806 | 50 | 50 | 50 | 50 | 50 | 50 | 50 | 50 | 50 | 50 | 50 | 50 | 50 | 50 | 50 | 50 | 50 |
| MA 100 | 2 | 2 | 2 | 2 | 2 | 2 | | | | | | | 2 | 2 | 2 | | |
| VULCAN XC-72 | | | | | | | 20 | 20 | 20 | 20 | 20 | 20 | | | | 20 | 20 |

### Preparation of test coated article 1

Examples 21-26 and Comparative Examples 7-9 Aqueous coating materials prepared by the procedure described above were selected as listed in Table 3 and spray coated onto a (degreased) polypropylene sheet to a dry film thickness of about 20 µm, and then heat dried at 80°C for 20 minutes to fabricate test coated articles.

Each of the test coated articles obtained as described above was provided for the following performance test. The results are shown in Table 3.

### Performance test methods

Initial adhesion: Lines were formed in the coated film surface to the base using a cutter to produce 100 squares of size 2 mm x 2 mm, adhesive Cellophane^{™} Tape was attached to the surface, and the number of squares left on the coated film after rapidly peeling off the tape at 20°C was determined. G = 100 (no peeling), F = 99-51, P = ≤50.

Humidity resistance: The test coated article was allowed to stand for 10 days at 50°C, 98% RH, and the dry coated surface was visually examined. G = No blistering, F = No blistering but some loss of luster, P = Blistering.

Solvent resistance: The coated film surface of the test coated article was rubbed for 10 passes under a load of about 9.8 N using a stack of 10 xylene-wetted gauze sheets, and then the coated film surface was visually examined. G = No exposure of base, F = Exposure of base by shaving of coated film, P = Exposure of base by dissolution of coated film.

**Table 3**

| | Example 21 | Example 22 | Example 23 | Example 24 | Example 25 | Example 26 | Comp. Ex. 7 | Comp. Ex. 8 | Comp. Ex. 9 |
|---|---|---|---|---|---|---|---|---|---|
| Aqueous coating | (1) | (2) | (3) | (4) | (5) | (6) | (13) | (14) | (15) |
| Initial adhesion | G | G | G | G | G | G | F | G | G |
| Humidity resistance (blistering) | G | G | G | G | G | G | G | G | G |
| Solvent resistance | G | G | G | G | G | G | G | P | P |

### Preparation of test coated article 2

Examples 27-32 and Comparative Examples 10-11 Aqueous coating materials prepared by the procedure described above were selected as primers, as listed in Table 4, and were each spray coated onto (degreased) polypropylene molded into the shape of an automobile bumper to a dry film thickness of about 10 µm, and after 3 minutes of preheating at 80°C, SOFLEX #420 (solvent-type colored base coating material, product of Kansai Paint Co., Ltd.) was electrostatically coated thereon as a colored base coating material to a dry film thickness of about 15 µm, preheating was continued for 3 minutes at 80°C, SOFLEX #450 CLEAR (acryl/urethane-based solvent-type clear coating, product of Kansai Paint Co., Ltd.) was electrostatically coated thereover as a clear coating to a dry film thickness of about 30 µm, and the bumper was heat dried at 80°C for 30 minutes to prepare test coated articles.

Each of the test coated articles obtained as described above was provided for the following performance test. The results are shown in Table 4.

### Performance test methods

Initial adhesion: Lines were formed in the coated film surface to the base using a cutter to produce 100 squares of size 2 mm x 2 mm, adhesive Cellophane^{™} Tape was attached to the surface, and the number of squares left on the coated film after rapidly peeling off the tape at 20°C was determined. G = 100 (no peeling), F = 99-51, P = ≤50.

Water resistance: A portion of the coated bumper was cut from each test coated article and immersed for 10 days in hot water at 40°C, raised and dried, and then subjected to an adhesion test in the same manner as the initial adhesion test described above, and the number of squares left on the coated film was determined. The dried coated surface was visually examined. G = No blistering, F = No blistering but some loss of luster, P = Blistering.

**Table 4**

| | Example 27 | Example 28 | Example 29 | Example 30 | Example 31 | Example 32 | Comp. Ex. 10 | Comp. Ex. 11 |
|---|---|---|---|---|---|---|---|---|
| Aqueous coating | (7) | (8) | (9) | (10) | (11) | (12) | (16) | (17) |
| Initial adhesion | G | G | G | G | G | G | F | G |
| Water resistance (adhesion) | G | G | G | G | G | G | F | G |
| Water resistance (blistering) | G | G | G | G | G | G | P | F |

### Production of aqueous resin dispersion (B)

### Production Example 1

After adding 131.9 g of deionized water to 133.3 g of aqueous dispersion (A-1) while stirring with a Disper mixer for dilution, 60 g of the polymerizable monomer mixture (b-1) having the composition shown in Table 5 below and 4 g of ADEKA REASOAP SR-1025 (reactive emulsifier, trade name of Adeka Corp.) were added. This was transferred to a four-necked flask equipped with a thermometer, stirrer and reflux condenser, and after heating to 65°C, 0.42 g of VA-057 (polymerization initiator, product of Wako Pure Chemical Industries, Ltd.) diluted with 8.4 g of deionized water was added and reacted for 1.5 hours to obtain aqueous resin dispersion (B-1). The solid concentration of the aqueous resin dispersion was 30%, and the pH was 8.0.

### Production Example 2

An aqueous resin dispersion (B-2) was obtained in the same manner as Production Example 1, except that the mixing composition of the polymerizable monomer mixture in Production Example 1 was changed according to (b-2) of Table 5. The solid concentration of the aqueous resin dispersion was 30%, and the pH was 8.0.

### Production Example 3

After adding 105.2 g of deionized water to 160.0 g of aqueous dispersion (A-2) while stirring with a Disper mixer for dilution, 60 g of the polymerizable monomer mixture (b-1) shown in Table 5 and 4 g of ADEKA REASOAP SR-1025 were added. This was transferred to a four-necked flask equipped with a thermometer, stirrer and reflux condenser, and after heating to 65°C, 0.42 g of VA-057 diluted with 8.4 g of deionized water was added and reacted for 1.5 hours to obtain aqueous resin dispersion (B-3). The solid concentration of the aqueous resin composition was 30%, and the pH was 7.2.

**Table 5**

| Monomer mixture | b-1 | b-2 |
|---|---|---|
| t-Butyl methacrylate | 45.7 | 41.7 |
| Cyclohexyl methacrylate | 10.8 | 9.9 |
| Diacetone acrylamide | | 5.2 |
| 1,6-Hexanediol diacrylate | 2.9 | 2.6 |
| Glycidyl methacrylate | 0.6 | 0.6 |

### Preparation of aqueous coating material

### Example 33

After combining 20 parts by solid weight of the acid-modified chlorinated polyolefin aqueous dispersion (A-1) obtained in Example 1, 60 parts by solid weight of the aqueous resin dispersion (B-1), 20 parts by solid weight of an acrylic resin solution (*3), 50 parts of "MICRO ACE K-1 (fine talc powder product of Nippon Talc Co., Ltd.) and 10 parts of FlowBeads LE-2080 (polyethylene resin beads by Sumitomo Seika Chemicals Co., Ltd., mean particle size of approximately 12 µm) following an ordinary procedure, the mixture was diluted with deionized water to a solid content of 35% to obtain aqueous coating material (18).

Examples 34-42 and Comparative Examples 12-14 Aqueous coating materials (19)-(30) were obtained in the same manner as Example 33, except that the mixing composition of Example 33 was changed as shown in Table 6.

The contents shown in Table 6 are expressed as solid contents, and (*3)-(*4) in the table are as follows.

(*3) Acrylic resin solution: 35 parts of ethyleneglycol monobutyl ether was charged into an ordinary acrylic resin reaction tank equipped with a stirrer, thermometer and reflux condenser, heated while stirring and held at 110°C. A mixture of 10 parts of styrene, 40 parts of methyl methacrylate, 25 parts of n-butyl methacrylate, 10 parts of 2-hydroxyethyl methacrylate, 3 parts of methacrylic acid, 5 parts of N,N-dimethylaminoethyl methacrylate (solid content; added as a solution in 10 parts of deionized water), 10 parts of NF BISOMER PEM6E (polyethyleneglycol monomethacrylate with molecular weight of approximately 350, trade name of Dai-ichi Kogyo Seiyaku Co., Ltd.), 4 parts of azobisisobutyronitrile and 20 parts of isobutyl alcohol, was added dropwise thereto over a period of 3 hours. Upon completion of the dropwise addition, the mixture was matured at 110°C for 30 minutes, and then an additional catalyst mixture comprising 15 parts of ethyleneglycol monobutyl ether and 0.5 part of azobisisobutyronitrile was added dropwise over a period of one hour. After further maturing at 110°C for 1 hour, the mixture was cooled to obtain an acrylic resin solution with a solid content of 55%.

(*4) ARTPEARL G-800: Acrylic resin beads by Negami Chemical Industrial Co., Ltd., mean particle size of approximately 6 µm.

**Table 6**

| | Example | | | | | | | | | | Comp. Ex. | | |
|---|---|---|---|---|---|---|---|---|---|---|---|---|---|
| | 33 | 34 | 35 | 36 | 37 | 38 | 39 | 40 | 41 | 42 | 12 | 13 | 14 |
| Aqueous coating | (18) | (19) | (20) | (21) | (22) | (23) | (24) | (25) | (26) | (27) | (28) | (29) | (30) |
| Aqueous resin dispersion (B-1) | 60 | | | 60 | | 80 | | | 45 | | | | |
| Aqueous resin dispersion (B-2) | | 60 | 70 | | 70 | | 80 | 80 | | 45 | | | |
| Aqueous resin dispersion (B-3) | | | | | | | | | | | 60 | 60 | |
| Aqueous dispersion (A-1) | 20 | 20 | 10 | | | | | | 35 | 35 | | 20 | 60 |
| Aqueous dispersion (A-3) | | | | 20 | 10 | | | | | | | | |
| Aqueous dispersion (A-2) | | | | | | | | | | | 20 | | |
| Adipic dihydrazide | | 0.1 | 0.1 | | 0.1 | | 0.1 | 0.1 | | 0.1 | | | |
| Acryl resin solution (*3) | 20 | 20 | 20 | 20 | 20 | 20 | 20 | 20 | 20 | 20 | 20 | 20 | 40 |
| MICRO ACE K-1 | 50 | 50 | 50 | 50 | 50 | 50 | 50 | 50 | 50 | 50 | 50 | 50 | 50 |
| FLOWBEADS LE-2080 | 10 | 10 | 20 | 10 | 10 | 20 | 10 | 20 | 10 | 5 | 10 | | 10 |
| ARTPEARL G-800 (*4) | | | | | | | 10 | | 10 | | | | |
| Initial adhesion | G | G | G | G | G | G | G | G | G | G | G | G | G |
| Humidity resistance (blistering) | G | G | G | G | G | G | G | G | G | G | F | F | G |
| Solvent resistance | G | VG | VG | G | VG | G | VG | VG | G | G | G | G | P |
| Damage resistance | G | G | VG | G | G | G | G | VG | G | G | G | P | F |

### Preparation of test coated article 3

Aqueous coating materials prepared in the manner described above were spray coated onto a (degreased) polypropylene sheet to a dry film thickness of about 20 µm, and then heat dried at 80°C for 20 minutes to fabricate test coated articles. Each of the obtained test coated articles was provided for the following performance test. The results are summarized in Table 6.

### Performance test methods

Initial adhesion: Lines were formed in the coated film surface of each test coated article to the base using a cutter to produce 100 squares of size 2 mm x 2 mm, adhesive Cellophane^{™} Tape was attached to the surface, and the number of squares left on the coated film after rapidly peeling off the tape at 20°C was determined. G = 100 (no peeling), F = 99-51, P = ≤50.

Humidity resistance: The test coated article was allowed to stand for 10 days at 50°C, 98% RH, and the dry coated surface was visually examined. G = No blistering, F = No blistering but some residual water tracks, P = Blistering.

Solvent resistance: The coated film surface of the test coated article was rubbed for 10 passes under a load of about 9.8 N using a stack of 10 xylene-wetted gauze sheets, and then the coated film surface was visually examined. VG = No sticking, G = Sticking, but no exposure of base, F = Exposure of base by shaving of coated film, P = Exposure of base by dissolution of coated film.

Damage resistance: The coated film surface of the test coated article was scratched with a fingernail, and the state of damage was visually examined. VG = No discernible damage, G = Damage but without forming recess, F = Notable damage with recess, P = Exposure of base.

According to the invention it is possible to obtain an aqueous coating composition with excellent adhesion for plastic bases, which can form coated films with excellent water resistance, stain resistance, damage resistance and solvent resistance, and therefore the invention is industrially useful.

## Claims

1. An aqueous resin composition **characterized by** being obtained by emulsion polymerization using a polymerizable unsaturated monomer (b) in the presence of an aqueous resin dispersion (A) obtained from an acid-modified polyolefin (a), an ether-based solvent and a basic substance.

2. An aqueous resin composition according to claim 1, wherein the polymerizable unsaturated monomer (b) comprises a carbonyl group-containing polymerizable unsaturated monomer.

3. An aqueous resin composition according to claim 1, wherein the use ratio of the acid-modified polyolefin (a) and polymerizable unsaturated monomer (b) is 5/95-95/5 as the solid mass ratio.

4. An aqueous resin composition according to claim 1, wherein a reactive emulsifying agent is used for the emulsion polymerization.

5. An aqueous coating composition comprising an aqueous resin composition according to any one of claims 1 to 4.

6. An aqueous coating composition according to claim 5, which further comprises a hydrazine derivative.

7. A coating method for plastic molded articles, **characterized by** coating an aqueous coating composition according to claim 5 or 6 onto a plastic molded article.

8. A coated article obtained by a coating method according to claim 7.

9. An aqueous coating composition **characterized by** comprising an aqueous resin dispersion (B) obtained by emulsion polymerization of a polymerizable unsaturated monomer (b) in the presence of an aqueous resin dispersion (A) containing an acid-modified polyolefin (a), an ether-based solvent and a basic substance, with resin beads (C), wherein the resin beads (C) are added at 1-30 parts by mass with respect to 100 parts by mass of the total resin solid content of the coating material.

10. An aqueous coating composition according to claim 9, wherein the polymerizable unsaturated monomer (b) comprises a carbonyl group-containing polymerizable unsaturated monomer.

11. An aqueous coating composition according to claim 9, wherein the use ratio of the acid-modified polyolefin (a) and polymerizable unsaturated monomer (b) in the aqueous resin dispersion (B) is 5/95-95/5 as the solid mass ratio.

12. An aqueous coating composition according to claim 9, wherein the resin beads (C) are polyethylene resin beads.

13. An aqueous coating composition according to claim 9, which comprises the aqueous resin dispersion (A') containing the acid-modified polyolefin (a), ether-based solvent and basic substance and the aqueous resin dispersion (B) in proportions of (A') = 1-50 mass% and (B) = 50-99 mass%, based on their total solid weight.

14. An aqueous coating composition according to claim 9, which further comprises a hydrazine derivative.

15. An aqueous coating composition according to claim 9, which comprises talc at 5-100 parts by mass with respect to 100 parts by mass as the total resin solid content of the coating material.

16. A coating method for plastic molded articles, **characterized by** coating an aqueous coating composition according to any one of claims 9 to 15 onto a plastic molded article.

17. A coated article obtained by a coating method according to claim 16.
